# EUROPEAN PATENT APPLICATION

(11) **EP 3 121 806 A1**
(43) Date of publication of application: **25.01.2017**
(21) Application number: 15883392.1
(22) Date of filing: 15.12.2015
(51) Int. Cl.: G09G 5/02, G02F 1/1333, G02F 1/1335, G09F 9/00, G09G 5/00, G09G 5/36, H01L 51/50, H04N 5/64, H04N 5/65, H04N 9/73, H05B 33/02, H05B 33/12

(54) **ELECTRONIC DEVICE**

(30) Priority: 26.02.2015 JP 2015036497
(71) Applicant: Sony Corporation, Tokyo 108-0075 (JP)
(72) Inventor: NAKANO, Minoru, Tokyo 108-0075 (JP)
(74) Representative: D Young & Co LLP
(86) International application number: PCT/JP2015/085094
(87) International publication number: WO 2016/136102

(57) **Abstract**

[Object] To provide an electronic apparatus having a display device and improved appearance design possibility.

[Solution] An electronic apparatus includes a display device, and a colored layer above a display surface of the display device. The display device corrects a display image on the basis of a transparent characteristic of the colored layer in a manner that a white region in a color coordinate includes an achromatic color of the display image through the colored layer.

## Description

### Technical Field

The present disclosure relates to electronic apparatuses.

### Background Art

Recently, electronic apparatuses such as mobile phones, smartphones, tablet terminals, digital cameras, and portable music players have been widespread. In many cases, such an electronic apparatus includes a display device.

In general, the display surface of the display device included in the electronic apparatus is black when information is not displayed. As the size of the screen of the display device has increased, such an electronic apparatus has a narrower frame and the like although the frame is a part freely designed and colored. For this reason, its appearance design possibility is restricted.

On the other hand, the number of users who want electronic apparatuses having high appearance design possibility has increasing year after year. Therefore, it has been desired to improve appearance design possibility of the electronic apparatuses having the display devices.

For example, Patent Literature 1 listed below discloses a technology of concealing a display surface of a display device in an electronic apparatus to make the display surface indistinguishable when information is not displayed. Patent Literature 1 further describes that the electronic apparatus has a simple appearance by preventing a user from recognizing existence of the display device when information is not displayed.

### Citation List

### Patent Literature

Patent Literature 1: WO 2007/055189

### Summary of Invention

### Technical Problem

However, the technology disclosed in Patent Literature 1 does not increase variations of the appearance design of the electronic apparatus with the display device and does not ease restriction on the appearance design possibility of the electronic apparatus. In addition, according to Patent Literature 1, the color of the whole electronic apparatus is unified into black, but appearance design possibility of the electronic apparatus is not improved.

Accordingly, the present disclosure proposes a novel and improved electronic apparatus having a display device and improved appearance design possibility.

### Solution to Problem

According to the present disclosure, there is provided an electronic apparatus including: a display device; and a colored layer above a display surface of the display device. The display device corrects a display image on the basis of a transparent characteristic of the colored layer in a manner that a white region in a color coordinate includes an achromatic color of the display image through the colored layer.

According to the present disclosure, the display surface of the display device in the electronic apparatus can be colored arbitrary color through the colored layer. In such a case, according to the present disclosure, the user can visually recognize a display image displayed on the display device as an image that is not colored through the colored layer.

### Advantageous Effects of Invention

As described above, according to the present disclosure, it is possible to improve appearance design possibility of the electronic apparatuses having the display device.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a perspective view illustrating a configuration example of an electronic apparatus according to a first embodiment of the present disclosure.
[FIG. 2A] FIG. 2A is an explanatory diagram illustrating a CIE xy chromaticity diagram.
[FIG. 2B] FIG. 2B is an explanatory diagram in which a partial region P in FIG. 2A is enlarged and isotemperature lines and isanomal are added.
[FIG. 2C] FIG. 2C is an explanatory diagram in which a partial region P in FIG. 2A is enlarged and isotemperature lines and isanomal are added.
[FIG. 3] FIG. 3 is a block diagram illustrating a control configuration of an electronic apparatus according to the embodiment.
[FIG. 4] FIG. 4 is a flowchart illustrating steps in a control example of an electronic apparatus according to the embodiment.
[FIG. 5] FIG. 5 is a perspective view illustrating a configuration example of an electronic apparatus according to a modification of the embodiment.
[FIG. 6] FIG. 6 is a perspective view illustrating a configuration of an electronic apparatus according to a second embodiment of the present disclosure.
[FIG. 7] FIG. 7 is a perspective view illustrating an example of a configuration of an electronic apparatus according to a third embodiment of the present disclosure.
[FIG. 8] FIG. 8 is a perspective view illustrating another example of a configuration of an electronic apparatus according to the third embodiment of the present disclosure.

### Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description is given in the following order.
1. First embodiment
1.1. Configuration example of electronic apparatus
1.2. Control example of electronic apparatus
1.3. Modification
2. Second embodiment
3. Second embodiment
4. Conclusion

### <1. First embodiment>

### [1.1. Configuration example of electronic apparatus]

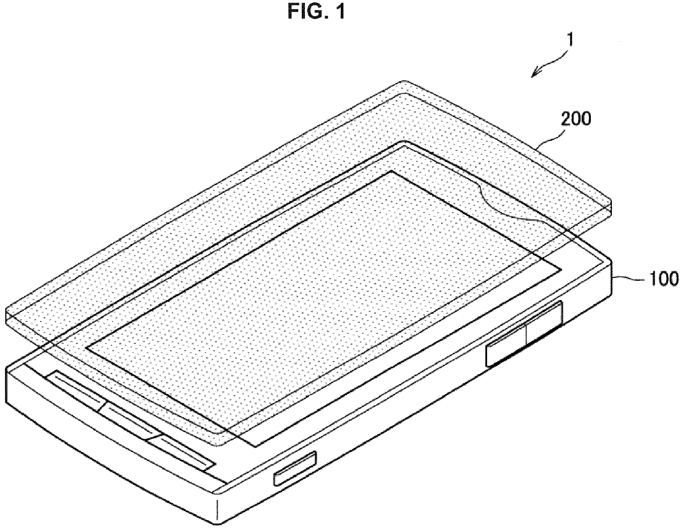

First, with reference to FIG. 1, a configuration example of an electronic apparatus according to a first embodiment of the present disclosure will be described. FIG. 1 is a perspective view illustrating a configuration example of an electronic apparatus 1 according to the first embodiment of the present disclosure.

As illustrated in FIG. 1, the electronic apparatus 1 according to the present embodiment includes a display device 100, and a colored layer 200 disposed on a display surface of the display device 100. Specifically, the electronic apparatus 1 according to the present embodiment may be a mobile phone, a smartphone, a tablet terminal, a digital camera, a portable music player, a television, or the like.

The colored layer 200 is colored. Therefore, the appearance design of the electronic apparatus 1 can be improved by coloring the electronic apparatus 1 with the same color as the colored layer 200. However, a user visually recognizes the display image displayed on the display device 100 to which transparent characteristics of the colored layer 200 are added. For example, in the case where the colored layer 200 is colored red, a user visually recognizes the display image through the colored layer 200 as a display image to which the red color of the colored layer 200 is added. With regard to this matter, the display device 100 of the electronic apparatus 1 according to the present embodiment performs color compensation on the display image to cancel the transparent characteristics of the colored layer 200. Thereby, a user visually recognizes the display image through the colored layer 200 as if the display image is not colored through the colored layer 200.

The colored layer 200 is a layer that is colored and that has transparency. Specifically, the colored layer 200 has transparent characteristics corresponding to colors included in a colored region in a color coordinate. More specifically, for example, when an illuminant C that is one of standard illuminants defined by Commission Internationale de I'Eclairage (CIE) emits light, the color of light transmitted through the colored layer 200 measured using a chromoscope is included in the colored region in the color coordinate.

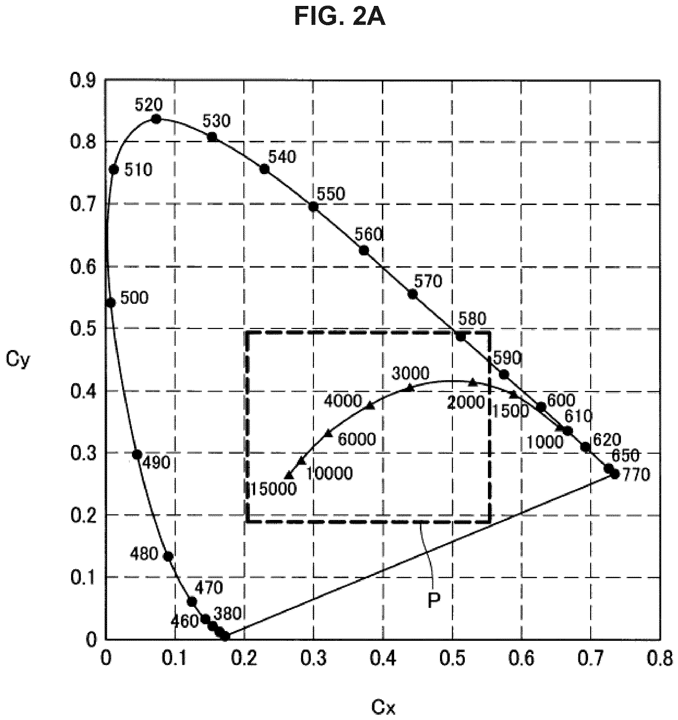

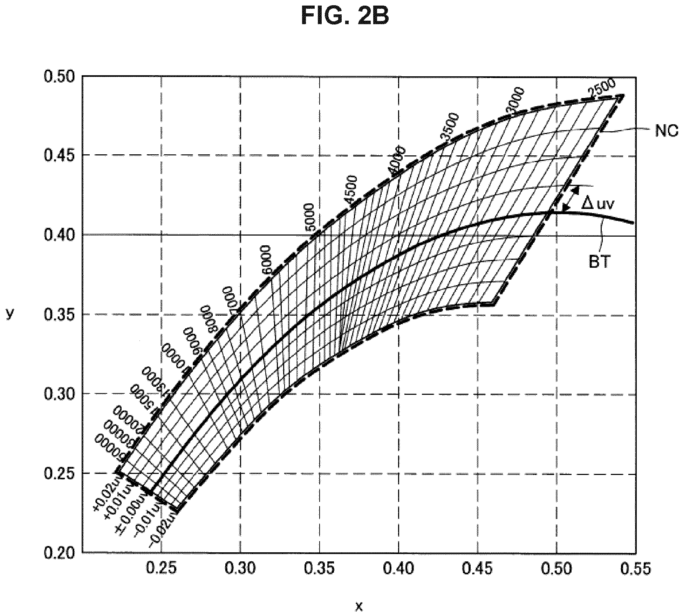

Next, with reference to FIGS. 2A and 2B, the colored region in the color coordinate will be described. FIG. 2A is a CIE xy chromaticity diagram, and FIG. 2B is a diagram in which a partial region P in FIG. 2A is enlarged and isotemperature lines and isanomal are added.

For example, as illustrated in FIG. 2A and FIG. 2B, a non-colored region NC in the CIE xy chromaticity diagram is defined as a region in which color temperature Tc is 2500 k or more and 50000 k or less, and deviation Δuv from a black body locus BT is 0.02 or less. The colored region is a region other than the non-colored region. The black body locus BT plots a relation between temperatures when heating an idealized object (black body) that absorbs all energy, and colors emitted by the heated black body. In the case where deviation between the black body locus and the color of light transmitted through the colored layer 200 is large, the transmitted light can be considered to be colored through the colored layer 200 since most illuminants have colors similar to the black body locus BT.

The example in which the colored region in the color coordinate is defined using the CIE xy chromaticity diagram of the xyY color system has been described in the above. In addition, the colored region in the color coordinate can also be defined using another color space by converting the above described coordinate. For example, the colored region in the color coordinate can be defined using a color coordinate in a color space of an L*u*v* color system, or can be defined using a color coordinate in a color space of an L*a*b* color system.

It is preferable that the colored layer 200 is made of high strength and high hardness material that functions as a protective cover of the display surface of the display device 100. Examples of such a material for the colored layer 200 include artificial gemstones having colors, colored glass, and colored plastic resin.

Examples of the artificial gemstones having colors include ruby, blue sapphire, violet sapphire, star ruby, star sapphire, emerald, alexandrite, opal, and the like. Examples of the colored glass include colored glass obtained by adding trace transition metal compound or trace heavy-metal compound into general glass. Examples of the colored plastic resin include a colored transparent plastic resin with dye added, such as acrylic resin, methacrylic resin, polyethylene terephthalate resin, and polycarbonate resin.

The display device 100 is capable of displaying an image and the like. Specifically, the display device may be a display device capable of full-color display.

Specific examples of the display device 100 include a liquid crystal display (LCD) device, an Organic ElectroLuminescence Display (OELD) device, and a light-emitting diode (LED) display device using an LED for each pixel.

The display device 100 performs color compensation on a display image to cancel transparent characteristics of the colored layer 200. Thereby, a user visually recognizes the display image through the colored layer 200 as if the display image is not colored through the colored layer 200.

More specifically, for example, the display device 100 corrects colors of the display image multiplied by the transparent characteristics of the colored layer 200, in a manner that a white region in a color coordinate includes colors in an achromatic color part of the display image before the multiplication. The achromatic color has no hue or saturation. The achromatic color includes white, black, and grays that are colors between white and black, for example. For example, the display device 100 displays display images having achromatic color parts of 30% while, 50% white, and 100% white, and corrects colors of the display images multiplied by the transparent characteristics of the colored layer 200, in a manner that a white region in a color coordinate includes colors in the achromatic color parts of the display images.

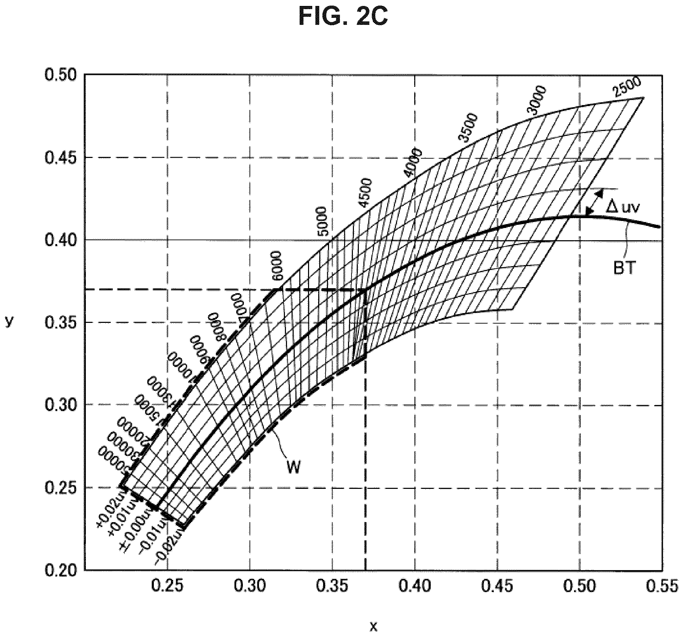

Next, with reference to FIGS. 2A and 2C, the white region in the color coordinate will be described. As with FIG. 2B, FIG. 2C is a diagram in which the partial region P in FIG. 2A is enlarged and the isotemperature lines and the isanomal are added.

For example, as illustrated in FIG. 2A and FIG. 2C, the white region is a region W in which x is within 0.30±0.07, y is within 0.30±0.07, and the deviation Δuv from the black body locus BT is 0.02 or less in the CIE xy chromaticity diagram. Colors included in such a white region W are colors generally recognized as white. Accordingly, the display device 100 can cancel colors added to the display image due to the transparent characteristics of the colored layer 200 by performing the color compensation that corrects colors obtained by multiplying the achromatic colors by the transparent characteristics of the colored layer 200, to colors included in the white region W. Thereby, a user can visually recognize the display images having appropriate colors that are not affected by the transparent characteristics of the colored layer 200 that is colored, even in the case where the colored layer 200 is on the display surface of the display device 100.

The example in which the white region in the color coordinate is defined using the CIE xy chromaticity diagram of the xyY color system has been described in the above. In addition, in a similar way, the white region in the color coordinate can also be defined using another color space by converting the above described coordinate. For example, the white region in the color coordinate can be defined using a color coordinate in a color space of an L*u*v* color system, or can be defined using a color coordinate in a color space of an L*a*b* color system.

As described above, the colored layer 200 that is colored various colors can be disposed on the display surface of the display device 100 in the electronic apparatus 1 according to the present embodiment. This increases color variations of the electronic apparatus 1. Therefore, the appearance design possibility of the electronic apparatus 1 can be improved according to the present embodiment.

In addition, the electronic apparatus 1 according to the present embodiment can perform the color compensation on the display image to cancel the transparent characteristics of the colored layer 200, so as to prevent the user from visually recognizing the display image displayed on the display device 100 as the image colored through the colored layer 200. Thereby, even in the case where the colored layer 200 is on the display surface of the display device 100, the electronic apparatus 1 can correct colors of the display image so that the user visually recognizes a white color in the display image as the white color.

In the electronic apparatus 1 according to the present embodiment, the colored layer 200 may be replaceable. Specifically, in the case where the colored layer 200 functions as the protective cover of the display surface of the display device 100, the user can replace the colored layer 200 to change appearance design of the electronic apparatus 1 to a desired color according to his/her mood.

In such a case, the electronic apparatus 1 may change the color compensation on the display image to correspond to transparent characteristics of a replaced colored layer 200 by automatically recognizing the transparent characteristics of the replaced colored layer 200 using a camera, an optical sensor, or the like. Alternatively, the electronic apparatus 1 may change the color compensation on the display image to correspond to the transparent characteristics of the replaced colored layer 200 by storing transparent characteristics of a plurality of colored layers 200 in advance in the electronic apparatus 1 and causing the user to select the transparent characteristics of the replaced colored layer 200.

### [1.2. Control example of electronic apparatus]

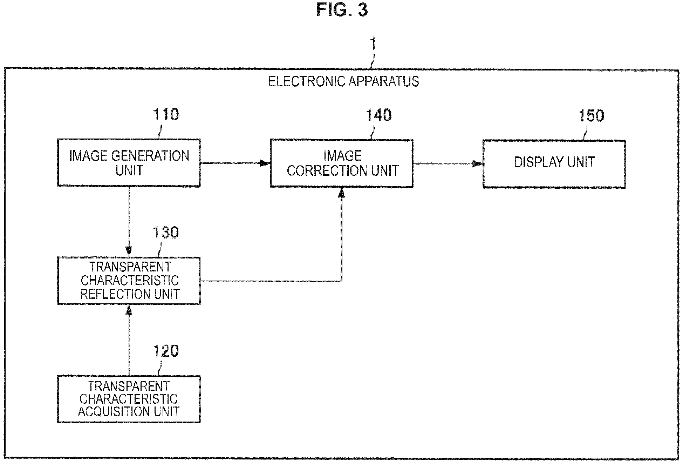

Next, with reference to FIG. 3, a control example of the electronic apparatus 1 according to the present embodiment will be described. FIG. 3 is a block diagram illustrating a control configuration of the electronic apparatus 1 according to the present embodiment.

As illustrated in FIG. 3, the electronic apparatus 1 includes an image generation unit 110, a transparent characteristic reflection unit 130, a transparent characteristic acquisition unit 120, and an image correction unit 140, and a display unit 150.

The image generation unit 110 generates a display image to be displayed on the display unit 150. Specifically, the image generation unit 110 generates the display image to be displayed on the display unit 150 on the basis of data stored in a storage device and the like in the electronic apparatus 1, data acquired from an external network such as the Internet, data input via an external input terminal or the like, for example.

The transparent characteristic acquisition unit 120 acquires transparent characteristics of the colored layer 200 disposed on the display surface of the display device 100. Specifically, the transparent characteristic acquisition unit 120 may acquire the transparent characteristic of the colored layer 200 from the storage device or the like, in the case where the transparent characteristic of the colored layer 200 is stored in the storage device or the like in advance. Alternatively, in the case where the electronic apparatus 1 has a camera, an optical sensor, or the like, and the camera, the optical sensor, or the like can measure the transparent characteristic of the colored layer 200, the transparent characteristic acquisition unit 120 may acquire the transparent characteristic of the colored layer 200 from the camera, the optical sensor, or the like.

The transparent characteristic reflection unit 130 generates an image obtained by reflecting the transparent characteristics of the colored layer 200 in the display image. Specifically, the transparent characteristic reflection unit 130 multiplies the display image generated by the image generation unit 110 by the transparent characteristic of the colored layer 200, and generates the displayed image colored through the colored layer 200.

The image correction unit 140 performs the color compensation on the display image to cancel the transparent characteristics of the colored layer 200. Specifically, the image correction unit 140 calculates the color compensation by which colors in an achromatic color part of the display image generated by the image generation unit 110 are included in the white region in the color coordinate in the image generated by the transparent characteristic reflection unit 130. Subsequently, the image correction unit 140 performs the calculated color compensation on the display image generated by the image generation unit 110. Thereby, the image correction unit 140 causes a user to visually recognize the display image as if the display image is not colored through the colored layer 200 even in the case where the user sees the display image via the colored layer 200.

It is preferable that the image correction unit 140 preliminarily uses images having achromatic colors of 30% white, 50% white, and 100% white, and calculates color compensation that can correct the transparent characteristics of the colored layer 200 with respect to each of the three achromatic colors so that the achromatic colors are included in the white region in the color coordinate. It is also possible to carry out color compensation performed by the image correction unit 140 by using a known image correction method such as gamma correction or gain correction.

The display unit 150 displays the display image on which the image correction unit 140 has performed the color compensation. Since the color compensation has been performed, the image correction unit 150 causes a user to visually recognize an appropriate display image that is not colored through the colored layer 200 in the case where the user sees the display image via the colored layer 200. As described above, the display unit 150 may be the LCD device, the OELD device, or the LED display device using the LED for each pixel.

The information processing in the image generation unit 110, the transparent characteristic acquisition unit 120, the transparent characteristic reflection unit 130, and the image correction unit 140 is achieved by operating cooperatively software and hardware.

For example, as the hardware, a central processing unit (CPU), read only memory (ROM), and random access memory (RAM) that are connected to each other via a bridge, an internal bus, or the like can be used.

In such a case, the CPU functions as an arithmetic device and a control device to control all of the operating processes in the electronic apparatus 1 according to programs. The ROM stores programs and arithmetic parameters used by the CPU. The RAM transiently stores programs used when the CPU is executed, various parameters that change as appropriate when executing such programs, and the like. The CPU can execute functions of the image generation unit 110, the transparent characteristic acquisition unit 120, the transparent characteristic reflection unit 130, the image correction unit 140, and the like by using such hardware and software, for example.

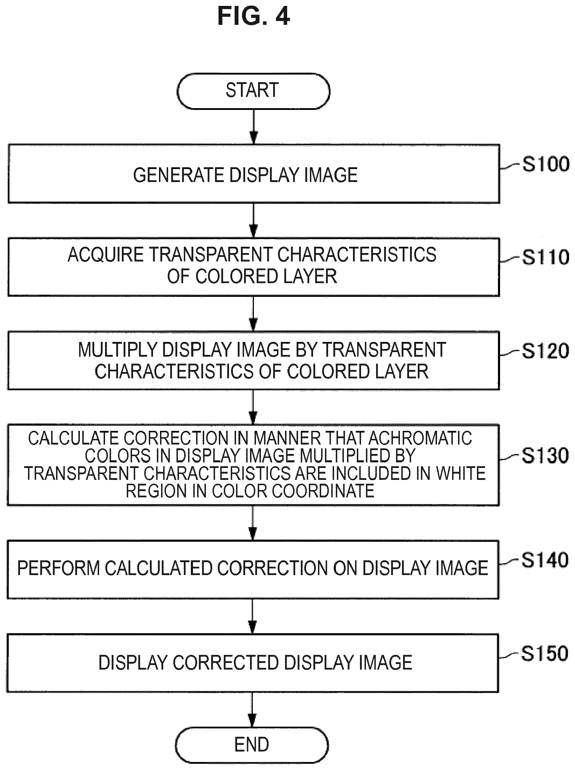

Next, with reference to FIG. 4, steps of the control example of the electronic apparatus 1 according to the present embodiment will be described. FIG. 4 is a flowchart illustrating the steps in the control example of the electronic apparatus 1 according to the present embodiment.

As illustrated in FIG. 4, first, the image generation unit 110 generates a display image (S100). Next, the transparent characteristic acquisition unit 120 acquires transparent characteristics of a colored layer 200 (S110). The transparent characteristic reflection unit 130 multiplies the generated display image by the transparent characteristics of the colored layer 200, and generates a colored display image (S120). Subsequently, with respect to the colored display image, the image correction unit 140 calculates color compensation necessary to change colors in an achromatic color part before coloring into colors included in a white region in a color coordinate (S130). The image correction unit 140 performs the calculated color compensation on the display image generated by the image generation unit 110 (S140). Subsequently, the display unit 150 displays the corrected display image (S150).

Thereby, the electronic apparatus 1 according to the present embodiment can display a display image that is visually recognized as a non-colored display image having appropriate colors even in the case where a user sees the display image via the colored layer 200.

### [1.3. Modification]

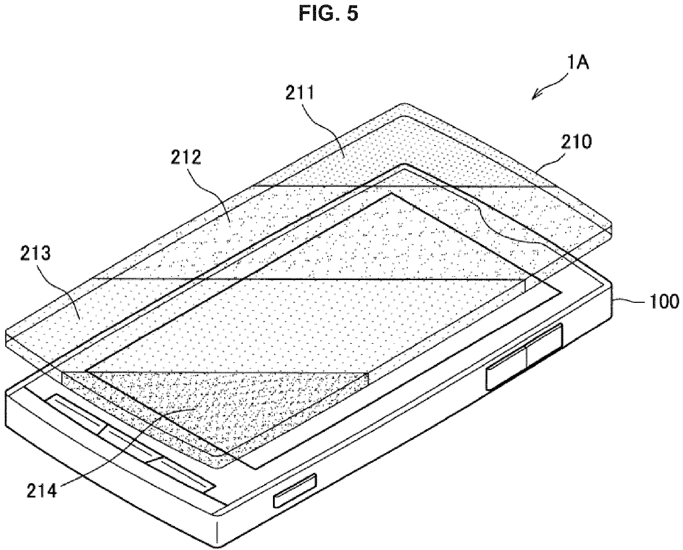

Next, with reference to FIG. 5, an electronic apparatus 1A according to a modification of the embodiment will be described. FIG. 5 is a perspective view illustrating a configuration example of the electronic apparatus 1A according to the modification of the embodiment.

As illustrated in FIG. 5, a colored layer 210 of the electronic apparatus 1A according to the present modification is divided into a plurality of in-plane regions 211, 212, 213, and 213. For example, the in-plane regions 211, 212, 213, and 213 of the colored layer 210 are colored with colors different from each other.

The in-plane regions 211, 212, 213, and 213 of the colored layer 210 in FIG. 5 are just an example. The size, shape, and the number of the in-plane regions can be changed in various ways.

In such a case, the display device 100 performs the color compensation on the display image in each of the in-plane regions 211, 212, 213, and 213 of the colored layer 210 to cancel the transparent characteristics of the in-plane regions 211, 212, 213, and 213 of the colored layer 210. In other words, the display device 100 stores the transparent characteristics and the position of each of the in-plane regions 211, 212, 213, and 213 of the colored layer 210, and performs the color compensation on each piece of the display image to cancel the transparent characteristics of the in-plane regions 211, 212, 213, and 213 of the colored layer 210. Thereby, in a similar way, the electronic apparatus 1A according to the present modification can display a display image that is visually recognized as a non-colored display image having appropriate colors in the case where a user sees the display image via the colored layer 210.

It is only necessary that at least any one of the in-plane regions 211, 212, 213, and 213 of the colored layer 210 has transparent characteristics corresponding to colors included in a colored region in a color coordinate. For example, at least one of the in-plane regions of the colored layer 210 may be not colored but may be transparent. In addition, for example, some of the in-plane regions of the colored layer 210 have the same transparent characteristics.

Alternatively, for example, the electronic apparatus 1A according to the present modification may have a colored layer 210 having gradational transparent characteristics. In such a case, it is possible to perform the color compensation on a display image to cancel the colors of the display image colored by the colored layer 210 by dividing the colored layer 210 into fine in-plane regions (for example, in units of some pixels).

Thereby, it is possible for the electronic apparatus 1A to have a colored layer 210 having a plane pattern using a plurality of colors (such as tiled patterns, geometric patterns, or dotted patterns). This enables high appearance design possibility.

Such a colored layer 210 having a plurality of in-plane regions can be formed by combining and bonding colored glass pieces like a stained glass, for example.

### <2. Second embodiment>

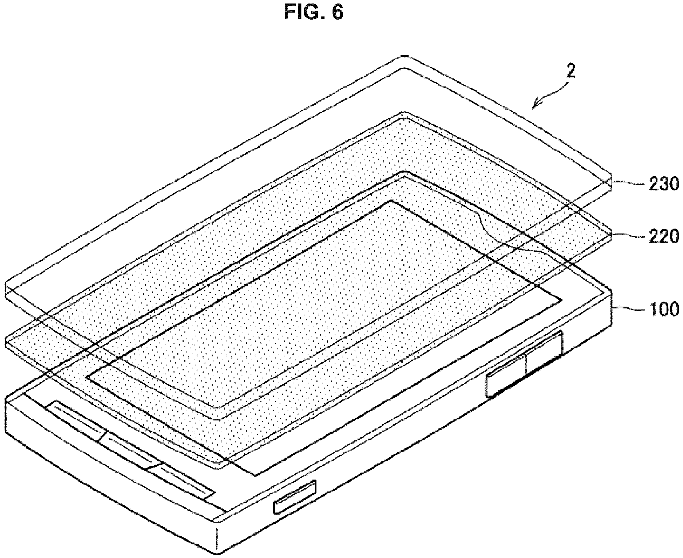

Next, with reference to FIG. 6, an electronic apparatus 2 according to a second embodiment of the present disclosure will be described. FIG. 6 is a perspective view illustrating a configuration of the electronic apparatus 2 according to the second embodiment of the present disclosure.

As illustrated in FIG. 6, the electronic apparatus 2 according to the present embodiment is different from the electronic apparatus 1 according to the first embodiment in that a colored layer 220 is a color film. On the colored layer 220, a protective cover 230 may be disposed to protect a display surface of a display device 100. The configuration of the display device 100 is substantially similar to the first embodiment. Accordingly, repeated description is omitted here.

For example, the colored layer 220 is a color film having transparency and a shape like a colored thin film. Any material can be used as the color film as long as the material has transparency and the material can be colored by dye or the like. For example, the colored layer 220 may be made of known organic resin or the like.

The protective cover 230 is a clear glass or resin having high strength and high hardness, for example. Specifically, the protective cover 230 can be made of soda lime glass, aluminosilicate glass, sapphire glass, acrylic resin, or the like.

According to this configuration, the colored layer 220 can be made of a color film that is less expensive than the artificial gemstones, the colored glass, or the like. This enables costs for producing the electronic apparatus 2 to be reduced. In addition, according to this configuration, it is possible to form the colored layer 220 that colors the display surface of the display device 100 and that improves the appearance design possibility, and the protective cover 230 that protects the display surface of the display device 100 and that improves durability, by using different materials. In other words, it is possible to form each of the colored layer 220 and the protective cover 230 by using an optimum material having characteristics desired by each of the colored layer 220 and the protective cover 230.

For example, the protective cover 230, the colored layer 220, and the display device 110 in FIG. 6 may be bonded via adhesive layers, or may be physically stacked on each other without the adhesive layers therebetween by pressing upper and lower surfaces using a member or the like.

### <3. Third embodiment>

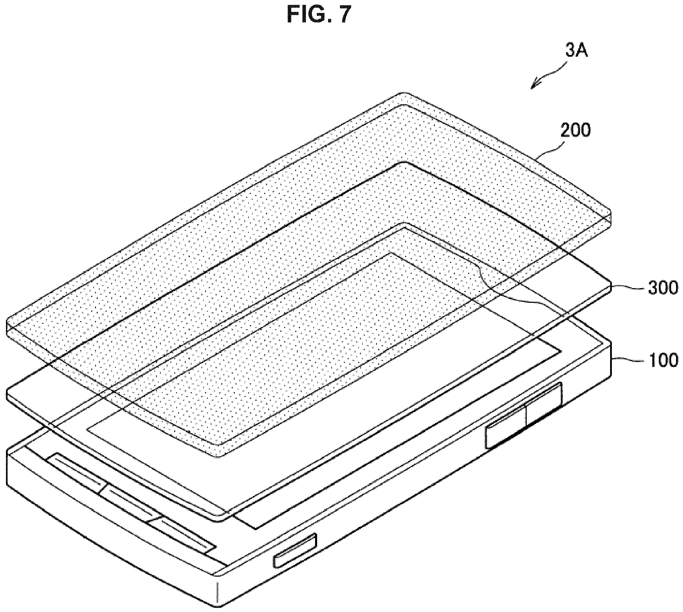

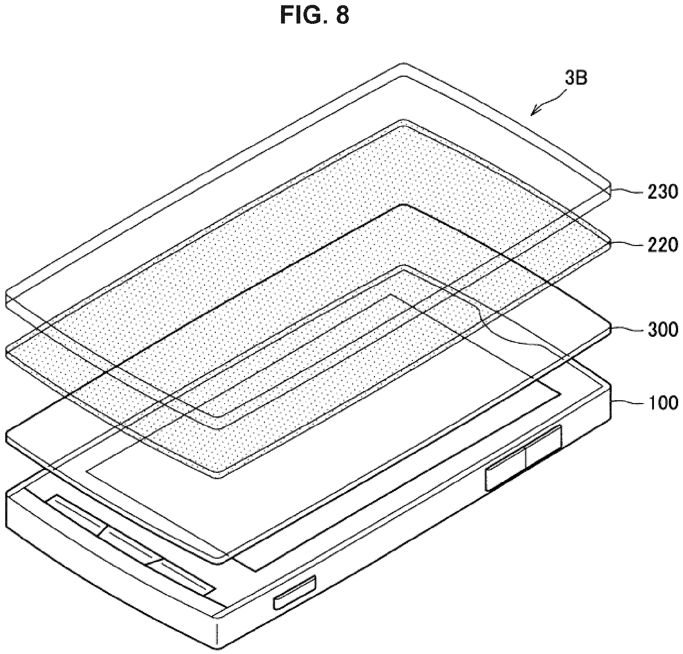

Next, with reference to FIGS. 7 and 8, electronic apparatuses 3A and 3B according to a third embodiment of the present disclosure will be described. FIG. 7 is a perspective view illustrating an example of a configuration of the electronic apparatus 3A according to the third embodiment of the present disclosure. FIG. 8 is a perspective view illustrating another example of a configuration of the electronic apparatus 3B according to the third embodiment of the present disclosure.

As illustrated in FIG. 7, the electronic apparatus 3A according to the present embodiment further includes a transmission-and-reflection layer 300 between a colored layer 200 and a display device 100. As illustrated in FIG. 8, the electronic apparatus 3B according to the present embodiment further includes a transmission-and-reflection layer 300 between a colored layer 220 and a display device 100. In other words, the electronic apparatuses 3A and 3B according to the present embodiment are different from the electronic apparatuses 1 and 2 according to the first and the second embodiments in that each of the electronic apparatuses 3A and 3B further includes the transmission-and-reflection layer 300 having transparency and reflectivity.

According to the present embodiment, the electronic apparatuses 3A and 3B with the transmission-and-reflection layers 300 having transparency and reflectivity are capable of reflecting some light beams incident on the colored layers 200 and 220. Thereby, light beams incident on the colored layers 200 and 220 pass through the colored layers 200 and 220, and then some of the light beams are reflected by the transmission-and-reflection layer 300. This means that some of the light beams pass through the colored layers 200 and 220 two times. Therefore, the electronic apparatuses 3A and 3B according to the present embodiment can emphasize the colors of the colored layers 200 and 220 especially when the display devices 100 are not displaying information. Since the transmission-and-reflection layers 300 have transparency, it is also possible to prevent display images displayed on the display devices 100 to be difficult to be visually recognized.

The transmission-and-reflection layer 300 is a layer having transparency and reflectivity. For example, it is preferable that the transmission-and-reflection layer 300 is a layer having reflectance of 20% or more and transmittance of 50% or more. In the case where the reflectance is less than 20%, the transmission-and-reflection layer 300 is not preferable since the transmission-and-reflection layer 300 has low reflectivity and an amount of reflected light is too small. In the case where the transmittance is less than 50%, the transmission-and-reflection layer 300 is not preferable since the visual recognizability of the display image on the display device 100 decreases.

Specifically, the transmission-and-reflection layer 300 can be made of a glass thin firm (so-called half mirror) in which a metallic thin film is formed by using vapor deposition or coating, a reflex polarization film (for example, DBEF series made by 3M Company) that reflects s waves and transmits P waves among light beams, or a film (for example, PICASUS (registered trademark) series made by Toray Industries, Inc.) to which transparency and reflectivity are applied by a nano multilayer stacked structure.

For example, the colored layer 200, the transmission-and-reflection layer 300, and the display device 110 in FIG. 7 may be bonded via adhesive layers, or may be physically stacked on each other without the adhesive layers therebetween by pressing upper and lower surfaces using a member or the like. The same is applied to the protective cover 230, the colored layer 220, the transmission-and-reflection layer 300, and the display device 100 in FIG. 8.

### <4. Conclusion>

As described above, according to each of the embodiments of the present disclosure, it is possible to color the display device of the electronic apparatuses in various colors via the colored layers while the display device is usually black when information is not displayed. Thereby, the appearance design possibility can be improved.

In addition, the electronic apparatus according to each of the embodiments of the present disclosure can perform the color compensation on the display image to cancel the transparent characteristics of the colored layer, so as to prevent the user from visually recognizing the display image displayed on the display device as the image colored through the colored layer. Thereby, the electronic apparatus according to each of the embodiments of the present disclosure can cause the user to visually recognize the display image that is not colored via the colored layer and that has appropriate colors even in the case where the colored layer is on the display surface of the display device.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.
(1) An electronic apparatus including:
   a display device; and
   a colored layer above a display surface of the display device,
   wherein the display device corrects a display image on the basis of a transparent characteristic of the colored layer in a manner that a white region in a color coordinate includes an achromatic color of the display image through the colored layer.
(2) The electronic apparatus according to (1), further including:
   a transmission-and-reflection layer having transparency and reflectivity between the display device and the colored layer.
(3) The electronic apparatus according to (1) or (2), wherein
   the colored layer is divided into a plurality of in-plane regions having transparent characteristics different from each other, and
   the display device corrects a piece of the display image in each of the plurality of in-plane regions, in a manner that a white region in a color coordinate includes the achromatic color of the display image through the colored layer.
(3) The electronic apparatus according to any one of (1) to (3), wherein
   the colored layer has a transparent characteristic corresponding to a color included in a colored region in a color coordinate.
(5) The electronic apparatus according to any one of (1) to (4), wherein
   the colored layer is a protective cover for the display surface.
(6) The electronic apparatus according to (5), wherein
   the colored layer is replaceable with another colored layer having a different transparent characteristic.
(7) The electronic apparatus according to any one of (1) to (4), wherein
   the colored layer is a color film, and
   a protective cover for the display surface is additionally disposed above the colored layer.
(8) The electronic apparatus according to any one of (1) to (7), wherein
   the display device is capable of full-color display.

### Reference Signs List

- 1, 2, 3A, 3B: electronic apparatus
- 100: display device
- 110: image generation unit
- 120: transparent characteristic acquisition unit
- 130: transparent characteristic reflection unit
- 140: image correction unit
- 150: display unit
- 200, 220: colored layer
- 230: protective cover
- 300: transmission-and-reflection layer

## Claims

1. An electronic apparatus comprising:
a display device; and
a colored layer above a display surface of the display device,
wherein the display device corrects a display image on the basis of a transparent characteristic of the colored layer in a manner that a white region in a color coordinate includes an achromatic color of the display image through the colored layer.

2. The electronic apparatus according to claim 1, further comprising:
a transmission-and-reflection layer having transparency and reflectivity between the display device and the colored layer.

3. The electronic apparatus according to claim 1, wherein
the colored layer is divided into a plurality of in-plane regions having transparent characteristics different from each other, and
the display device corrects a piece of the display image in each of the plurality of in-plane regions, in a manner that a white region in a color coordinate includes the achromatic color of the display image through the colored layer.

4. The electronic apparatus according to claim 1, wherein
the colored layer has a transparent characteristic corresponding to a color included in a colored region in a color coordinate.

5. The electronic apparatus according to claim 1, wherein
the colored layer is a protective cover for the display surface.

6. The electronic apparatus according to claim 5, wherein
the colored layer is replaceable with another colored layer having a different transparent characteristic.

7. The electronic apparatus according to claim 1, wherein
the colored layer is a color film, and
a protective cover for the display surface is additionally disposed above the colored layer.

8. The electronic apparatus according to claim 1, wherein
the display device is capable of full-color display.
